# EUROPEAN PATENT APPLICATION

(11) **EP 4 086 046 A1**
(43) Date of publication of application: **09.11.2022**
(21) Application number: 20919594.0
(22) Date of filing: 16.12.2020
(51) Int. Cl.: B25J 13/00, G05B 19/4069

(54) **PROCESSING DEVICE AND PROCESSING METHOD**

(30) Priority: 17.02.2020 JP 2020024608
(71) Applicant: OMRON Corporation, Kyoto 600-8530 (JP)
(72) Inventor: OYA, Taku, Kyoto-shi, Kyoto 600-8530 (JP); SEKIMOTO, Hidehiko, Kyoto-shi, Kyoto 600-8530 (JP)
(74) Representative: Isarpatent
(86) International application number: PCT/JP2020/046905
(87) International publication number: WO 2021/166398

(57) **Abstract**

A processing device displays a result of simulation of synchronous control performed by a control device to synchronously control at least two of a plurality of control targets by executing a program. The processing device includes a display that displays the plurality of control targets in accordance with execution of the program in the simulation, an identification unit that identifies, among the plurality of control targets, a synchronization target group including control targets synchronously controlled in the execution of the program in the simulation, and a controller that causes the display to display the synchronization target group identified by the identification unit among the plurality of control targets displayed by the display in a manner distinguishable from control targets other than the synchronization target group.

## Description

### FIELD

The present invention relates to a processing technique for displaying results of simulation of synchronous control.

### BACKGROUND

In recent years, factory automation (FA) techniques using control devices such as programmable logic controllers (PLCs) have been widespread at various production sites. Such control devices can perform synchronous control of motion axes and robots. For example, a robot arm picks up a first workpiece being transported on a conveyor and assembles the workpiece with a second workpiece gripped by another robot. Such serial synchronous control minimizes the time for interlocking.

To precisely determine the success or failure of fitting of the first workpiece with the second workpiece, a known robot control device includes a workpiece position obtainer that detects the relative positions of the first workpiece and the second workpiece, a force detector that detects a force applied to the first workpiece or the second workpiece in the fitting process, and an actual fitting amount obtainer that obtains a value indicating the actual fitting amount of the first workpiece with respect to the second workpiece (refer to, for example, Patent Literature 1).

### CITATION LIST

### PATENT LITERATURE

Patent Literature 1: Japanese Unexamined Patent Application Publication No. 2018-24049

### SUMMARY

### TECHNICAL PROBLEM

Although the robot control device described above can synchronize a motion axis with a robot or a robot with another robot, such synchronous control may be preceded by simulation between synchronization targets. However, the known technique cannot facilitate real-time determination of synchronization targets, or a master robot and a slave robot, as well as synchronization timing of these targets during simulation, and cannot facilitate debugging or adjusting the synchronization function as designed.

In response to the above issue, one or more aspects of the present invention are directed to a technique that allows viewing of the state of control targets in synchronization during simulation of synchronous control.

### SOLUTION TO PROBLEM

In the aspects of the present invention, a processing device and a processing method allow display of results of simulation of synchronous control performed by a control device that synchronously controls at least two of multiple control targets by executing a program.

More specifically, a processing device is a device for displaying a result of simulation of synchronous control performed by a control device to synchronously control at least two of a plurality of control targets by executing a program. The processing device includes a display that displays the plurality of control targets in accordance with execution of the program in the simulation, an identification unit that identifies, among the plurality of control targets, a synchronization target group including control targets synchronously controlled in the execution of the program in the simulation, and a controller that causes the display to display the synchronization target group identified by the identification unit among the plurality of control targets displayed by the display in a manner distinguishable from control targets other than the synchronization target group.

The above processing device includes the display that allows viewing of the start and end times of synchronization in synchronous control during stepwise implementation of the synchronization function of the control device, and thus allows debugging or adjusting the synchronization function as designed. This structure reduces man-hours to be used for designing and verification.

The control device may further include a first processor that executes a first program in a first execution format in which the first program is fully executed for each execution in every predetermined control cycle to calculate a first command value for controlling one or more first control targets being one or more of the plurality of control targets, and a second processor that executes a second program in a second execution format in which parts of the second program are successively executed to calculate a second command value for controlling one or more second control targets being another control target of the plurality of control targets in every predetermined control cycle in accordance with an intermediate code generated by an interpreter interpreting at least a part of the second program. In this case, the display may display the one or more first control targets controlled by the first processor and the one or more second control targets controlled by the second processor in accordance with execution of the first program and the second program in the simulation. The identification unit may identify, among the one or more first control targets and the one or more second control targets, the synchronization target group synchronously controlled in the execution of the first program and the second program in the simulation. The controller may cause the display to display the synchronization target group identified by the identification unit among the one or more of first control targets and the one or more of second control targets displayed by the display in a manner distinguishable from control targets other than the synchronization target group.

The control device may synchronously control different synchronization target groups with different degrees of synchronization precision by executing the program. In this case, the controller may cause the display to display the different synchronization target groups in different display forms in accordance with types of synchronization precision in the synchronous control. This allows the manner of displaying each synchronization target group to be changed in accordance with the precision of synchronization, thus improving the efficiency of debugging associated with synchronous control performed by the control device.

For the control device to perform the synchronous control with another control device including predetermined processors corresponding to the first processor and the second processor in the control device with a degree of synchronization precision different from a degree of synchronization precision within the control device, the controller may cause the display to display the synchronization target group synchronously controlled by the control device and an inter-device synchronization target group synchronously controlled between the control device and the other control device in different display forms in accordance with a difference between the synchronization precision within the control device and the synchronization precision between the control device and the other control device. This allows the manner of displaying each synchronization target group to be changed between synchronous control performed within the control device and synchronous control performed between the control device and the other control device, thus improving the efficiency of debugging associated with synchronous control performed by the control devices.

The controller may cause the display to further display temporal transitions of predetermined signals associated with the synchronous control for the control targets included in the synchronization target group in accordance with the execution of the first program and the second program, and the temporal transitions of the predetermined signals may be displayed with time axes matching each other. This allows efficient debugging associated with synchronous control through visual and quantitative adjustments of, for example, the motor position and trigger time.

During a predetermined period including a switching time between the synchronous control and asynchronous control of the synchronization target group, the controller may cause the display to display the plurality of control targets at a slower speed than during a period other than the predetermined period. Typically, synchronous control and asynchronous control are switched instantaneously. The switching timing is thus difficult to determine visually. The simulation results are displayed at a lower speed before and after the start or end time of the synchronization to allow the user to easily identify portions to be debugged, and improves efficiency.

One or more aspects of the present invention may be directed to a processing method for displaying a result of simulation of synchronous control performed by a control device. More specifically, the processing method includes causing a display device to display the plurality of control targets in accordance with execution of the program in the simulation, identifying, among the plurality of control targets, a synchronization target group including control targets synchronously controlled in the execution of the program in the simulation, and causing the display device to display the synchronization target group identified among the plurality of control targets displayed by the display device in a manner distinguishable from control targets other than the synchronization target group. The technical ideas described in relation to the above processing device may be applied to the above processing method unless any technical contradiction arises.

### ADVANTAGEOUS EFFECTS

The states of control targets in synchronization can be viewed during simulation of synchronous control.

### BRIEF DESCRIPTION OF THE DRAWINGS

FIG. 1 is a schematic diagram of a control system 1 including a control device 100 in an embodiment of the present invention.
FIG. 2 is a functional block diagram of the control device 100 in the embodiment.
FIG. 3 is a block diagram of a processing device according to an embodiment of the present invention.
FIGs. 4A and 4B are schematic diagrams describing the synchronization state of synchronization targets, with FIG. 4A showing each robot picking a workpiece while being synchronized with the workpiece on a conveyor and FIG. 4B showing each robot performing an assembly operation while the robots are in synchronization.
FIG. 5 is a flowchart of a visualization method used in synchronous simulation according to an embodiment of the present invention.
FIG. 6 is a diagram describing example signal transitions associated with robot operations in FIG. 4B on a display.

### DETAILED DESCRIPTION

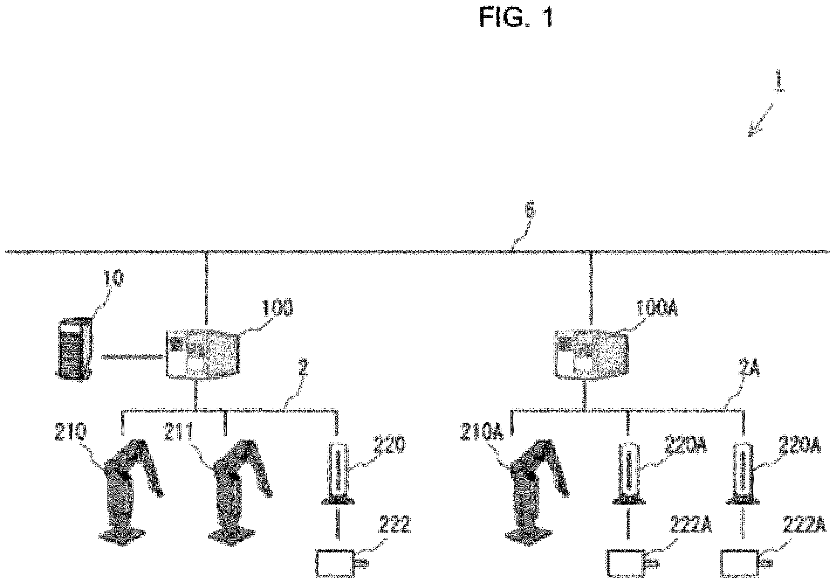

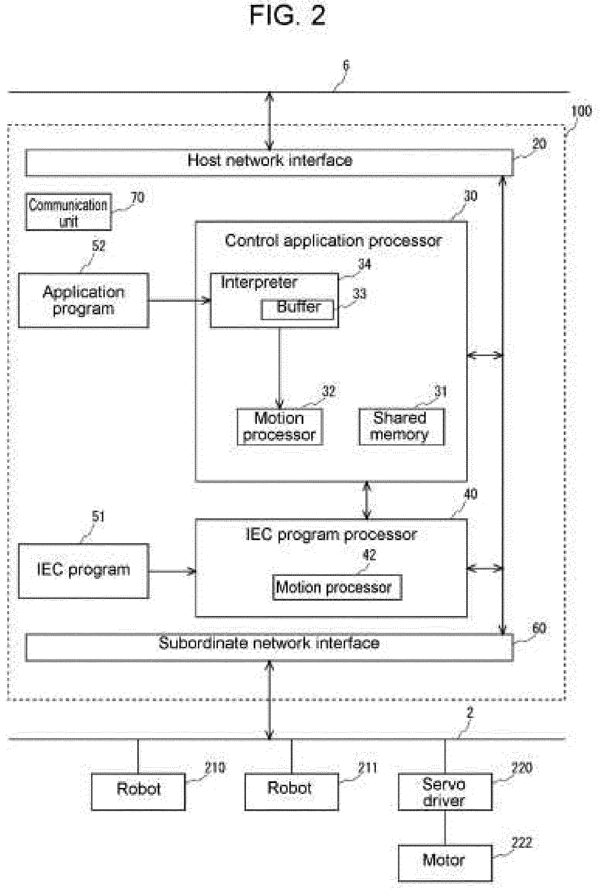

An example use of a processing device according to one or more embodiments of the present invention will now be described with reference to the drawings. The embodiments below are not intended to limit the present invention in claims, and all combinations of the features described in the embodiments may not be essential to the solutions to the invention. FIG. 1 is a schematic diagram of a control system 1 including a control device 100. FIG. 2 is a functional block diagram of the control device 100.

A processing device 10 according to the present embodiment is a simulation device, with its simulation targets being control targets (e.g., a robot 210 and a motor 222 described later) that are controlled by the control device 100. The processing device 10 is directly connected to the control device 100. The processing device 10 obtains information about the control targets and information about synchronous control of the control targets (e.g., programs) from the control device 100 and analyzes the synchronous control to be performed. The analysis results are displayed on a display as simulation results. The processing device 10 will be described in detail later.

The control device 100 in the present embodiment corresponds to an industrial controller that controls control targets being various equipment or devices. The control device 100 is a computer that performs control computations described later. The control device 100 may be connected to various field devices through a field network 2. The field devices include, for example, an actuator that physically acts on, for example, a production device or a production line (hereafter also collectively referred to as a field) and an input and output device that transmits and receives information to and from the field. In the example shown in FIG. 1, the field devices are the robot 210, a servo driver 220, and the motor 222. The servo driver 220 drives the motor 222 in accordance with output data (e.g., position commands or speed commands) from the control device 100. Examples of the robot 210 include a parallel robot, a selective compliance assembly robot arm (SCARA) robot, and an articulated robot. The control device 100 can thus integrally control the robot 210, the servo driver 220, and the motor 222. The control device 100 will be described in detail later.

The control device 100 transmits or receives data to or from one or more field devices through, for example, the field network 2. The control device 100 performs a process (input process) for collecting data collected or generated by various field devices (hereafter also referred to as input data), a process (calculation process) for generating data such as commands to the field devices (hereafter also referred to as output data), and a process (output process) for transmitting the generated data to target field devices.

The field network 2 may be a bus or a network that allows pre-timed communications for guaranteed data arrival time. For example, EtherCAT (registered trademark) is known as an example of such a bus or a network that allows pre-timed communications. Data communications between the control device 100 and a field device through the field network 2 is updated in very short cycles of the order of several hundred microseconds (µs) to several ten milliseconds (ms). Such update of exchanged data is also referred to as an input-output refresh.

The control device 100 is also connected to another device through a host network 6. The host network 6 may be EtherNet/IP (registered trademark), which is a typical network protocol. More specifically, the control device 100 is also connected to another control device 100A through the host network 6. In the other control device 100A, a robot 210A, a servo driver 220A, and a motor 222A, which are the field devices, are also connected through a field network.

Referring now to FIG. 2, the structure of the control device 100 will be described. The control device 100 is a computer that performs predetermined control computations as described above, and includes a processor and a memory for the control computations. The processor includes a central processing unit (CPU), a micro processing unit (MPU), and a graphics processing unit (GPU). The processor may include multiple cores, or the computer may include multiple processors. Examples of the memory include a volatile storage such as a dynamic random-access memory (DRAM) or a static random-access memory (SRAM) and a nonvolatile storage such as a hard disk drive (HDD) or a solid state drive (SSD). The processor reads various programs from the memory and executes the programs to perform appropriate control or various other processes (described later) of a synchronization target. In addition to a system program for implementing basic functions, the memory stores user programs (an IEC program 51 and an application program 52) designed in accordance with a production device or equipment as a synchronization target.

In one or more embodiments of the present disclosure, the IEC program 51 is fully scanned for each execution for calculating one or more command values for each execution. The IEC program 51 typically contains a program including one or more commands described in accordance with the international standard IEC61131-3 defined by the International Electrotechnical Commission (IEC). The IEC program 51 contains commands for sequence control and motion control. The IEC program 51 is in an execution format in which the program is fully executed (scanned) in each control cycle, and is suitable for instantaneous and speedy control. The application program 52 in one or more embodiments of the present disclosure is a control program for performing specific processing or a specific operation with a robot, and contains a program including one or more commands for implementing a control application with the robot. The application program 52 is basically distinguishable from the IEC program 51.

As shown in FIG. 2, the control device 100 includes an IEC program processor 40, a subordinate network interface 60, a host network interface 20, a control application processor 30, and a communication unit 70. The subordinate network interface 60 mediates data communication between the IEC program processor 40 and the field devices connected through the field network 2 and between the control application processor 30 and the field devices. The host network interface 20 mediates data communication between the IEC program processor 40 and the other control device 100A connected through the host network 6 and between the control application processor 30 and the other control device 100A. The communication unit 70 is a functional unit for communicating with the control device 100 without the host network interface 20 or the subordinate network interface 60.

The IEC program processor 40 executes (scans) the IEC program 51 in each predetermined control cycle and calculates one or more command values. In one or more embodiments of the present disclosure, the IEC program 51 is executed to control a predetermined device including the motor 222. A motion processor 42 calculates command values in each control cycle in accordance with a motion command contained in the IEC program 51. More specifically, the motion command contained in the IEC program 51 includes a command indicating the behavior over multiple control cycles (for example, a command instructing the predetermined device including the motor 222 to have an output for drawing a certain locus). When the motion command is executed, the motion processor 42 calculates command values in each control cycle in accordance with the instruction in the executed motion command. In other words, the motion processor 42 outputs command values in each control cycle to the predetermined device to implement the behavior instructed by the motion command.

The control application processor 30 calculates command values for controlling the control application based on, for example, the application program 52 and recipe information. In one or more embodiments of the present disclosure, the control application processor 30 executes the application program 52 to control the robot 210. The control application processor 30 calculates and outputs command values for the control application in synchronization with the IEC program processor 40 calculating and outputting the command values. In other words, the control application processor 30 calculates the command values in synchronization with the IEC program processor 40. This synchronous processing between the IEC program processor 40 and the control application processor 30 is not constantly performed and is switched appropriately between the synchronous process and the asynchronous process in accordance with the details of control for the control target. To calculate the command values in synchronization with the IEC program processor 40 calculating the command values, the control application processor 30 includes a motion processor 32, a buffer 33, and an interpreter 34.

The interpreter 34 successively interprets at least a part of the application program 52 and generates an intermediate code. The interpreter 34 includes the buffer 33 to store the generated intermediate code. In one or more embodiments of the present disclosure, the intermediate code contains a command for calculating command values in each control cycle, and may contain one or more commands or one or more functions. The motion processor 32 calculates command values in each control cycle in accordance with intermediate codes pre-generated by the interpreter 34 and stored in the buffer 33.

A shared memory 31 allows data sharing between the IEC program processor 40 and the control application processor 30. In one or more embodiments of the present disclosure, the shared memory 31 stores a part or all of the results of the processing performed by the control application processor 30. The IEC program processor 40 can access data stored in the shared memory 31 in the control application processor 30. The IEC program processor 40 may write data into the shared memory 31 in the control application processor 30. Such data written by the IEC program processor 40 is accessible by the interpreter 34 and the motion processor 32.

The control device 100 can synchronously execute the IEC program 51 and the application program 52. In this case, the interpreter 34 in the control application processor 30 successively executes parts of the application program 52 in each cycle longer than the control cycle, for example, in each cycle twice as long as the control cycle. The motion processor 42 in the IEC program processor 40 and the motion processor 32 in the control application processor 30 calculate command values in each control cycle. Thus, command values are output from the control device 100 in synchronization in the predetermined control cycle. As described above, the IEC program processor 40 and the control application processor 30 each include the motion processor for serially controlling the movement of the actuator. These motion processors calculate command values in synchronization. This allows the control in accordance with the IEC program 51 and the control in accordance with the application program 52 to be performed in synchronization with the control cycle. Thus, precise control in each control cycle can be performed.

Before each predetermined control application synchronization cycle (integral multiple of the control cycle), the interpreter 34 temporarily stops interpretation of the application program 52. At the time of temporary stop, the IEC program processor 40 and the control application processor 30 perform data synchronization with each other to share data consistent for the two processors. The interpreter 34 thus updates data shared with the IEC program processor 40 in each synchronization cycle. In addition to updating shared data, the interpreter 34 may also update (synchronize) input data and output data obtained from the field. This allows the control application processor 30 to control the robot 210 using data obtained by the IEC program processor 40. The control application synchronization cycle may have any length corresponding to an integral multiple of the control cycle. The control application synchronization cycle is appropriately set in accordance with, for example, the precision of control intended in the control application.

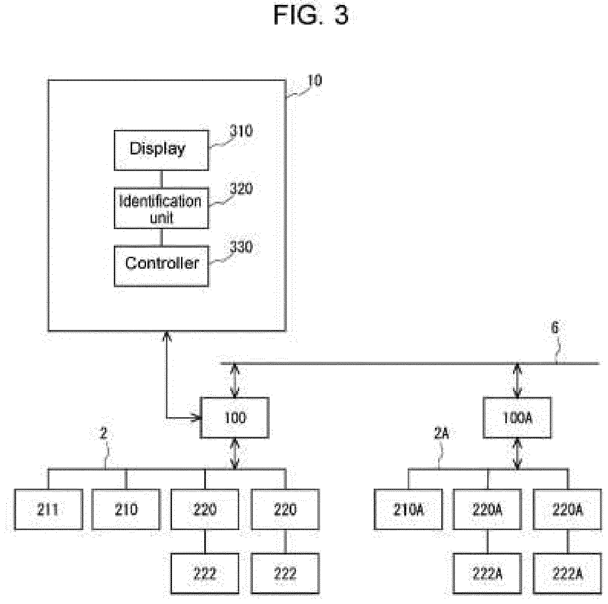

The control device 100 uses the IEC program 51 and the application program 52 to achieve synchronous control of multiple control targets. The other control device 100A has the same functional components as the control device 100. The synchronous control of each field device can also be performed. In the control devices 100 and 100A, the IEC program 51 or the application program 52 can be selected appropriately based on, for example, the details of control of the control target. In synchronous control, the movements of the control targets for the synchronous control are to be synchronized as expected to obtain intended results. For example, any incorrect setting of the start time of synchronous control, the end time of synchronous control, or a group of control targets for synchronous control (synchronization target group) disables an intended result of the synchronous control from being obtained. The processing device 10 thus performs simulation in advance to determine whether the details of synchronous control for the control targets defined in each program are appropriate. The processing device 10 will now be described. More specifically, display control in synchronous simulation performed by the processing device 10 will be described. FIG. 3 is a functional block diagram of the processing device 10.

As shown in FIG. 3, a broken line indicates the processing device 10. The processing device 10 includes a display 310, an identification unit 320, and a controller 330.

### Display

The display 310 is typically a display device such as a liquid crystal display, or another display unit, such as a display using a projector. The display 310 can analyze the programs in the control device 100 and visualizes the control operations of, for example, the robot 210 and the motor 222 that are control targets. In the present embodiment, the programs are the IEC program 51 and the application program 52 described above. The display 310 can directly obtain the programs in the control device 100 with the communication unit 70 in the control device 100. The display 310 then analyzes the obtained programs and obtains the details of synchronous control for the field devices including the robot 210, the servo driver 220, and the motor 222 that are the control targets, and determines the movements of the control targets in accordance with the control details. The movements of the control targets are displayed in accordance with execution of the programs on a display device such as a display. The user can view the movements of the control targets using the IEC program 51 and the application program 52. Instead of the display 310 directly obtaining the programs from the control device 100, information about the synchronous control of the control targets may be provided by a user operation. In this case, the processing device 10 may not be connected to the control device 100 with the communication unit 70.

### Identification Unit

For synchronous control performed by the control device 100, as described above, the times for the synchronous control for the control targets and the control targets (synchronization target group) to be synchronously controlled are set appropriately to obtain intended control results. The identification unit 320 then identifies a synchronization target group under synchronous control in the execution of the IEC program 51 and the application program 52 in the simulation, among the control targets including the robot 210, a robot 211, and the motor 222. The synchronization target group includes multiple control targets under synchronous control while the IEC program 51 and the application program 52 are being executed, among the control targets including the above field devices.

The identification unit 320 identifies the synchronization target group under synchronous control within the same control device 100. When the control device 100 can perform synchronous control with another control device (e.g., another control device 100A) including predetermined processors corresponding to the IEC program processor 40 and the control application processor 30 in the control device 100, the identification unit 320 can also identify the synchronization target group under synchronous control between the control device 100 and the other control device 100A. Controller

The controller 330 causes the display 310 to display the synchronization target group identified by the identification unit 320 in a manner distinguishable from other control targets displayed by the display 310. For example, the controller 330 may cause the display 310 to display the synchronization target group identified by the identification unit 320 with a color different from the color for displaying control targets other than the synchronization target group to allow the positions and the states of the synchronization target group identified by the identification unit 320 to be readily distinguishable. However, the manner of display is not limited to this example. The display may be in any manner (e.g., with a dotted frame) to distinguish the synchronization target group from the control targets other than the synchronization target group. The controller 330 controlling the manner of display used by the display 310 as described above allows the user to easily obtain the states about the synchronous control (e.g., the switching time between the synchronous control and the asynchronous control, and the control targets to be controlled synchronously), and to easily determine whether the details of control are as intended.

### First Embodiment

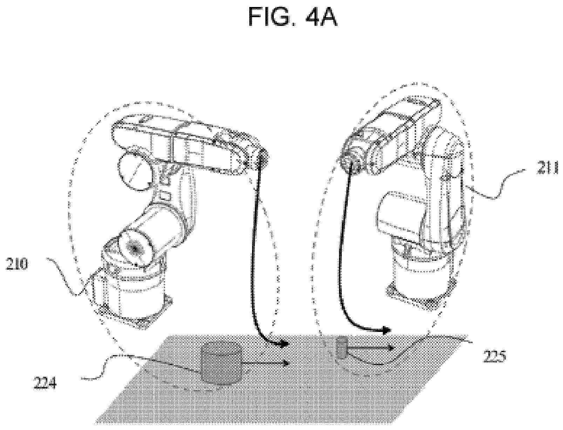

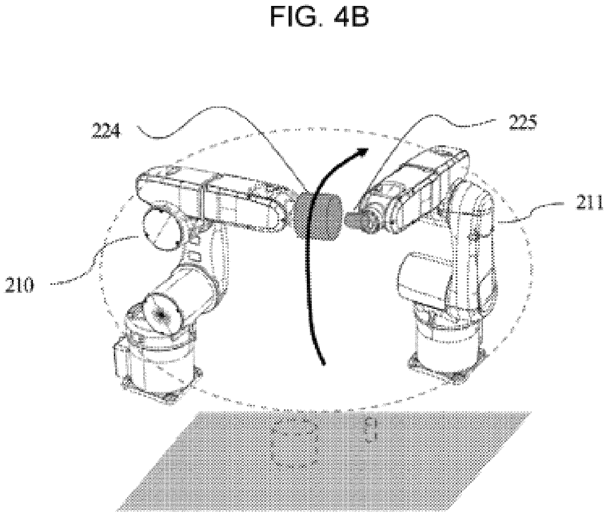

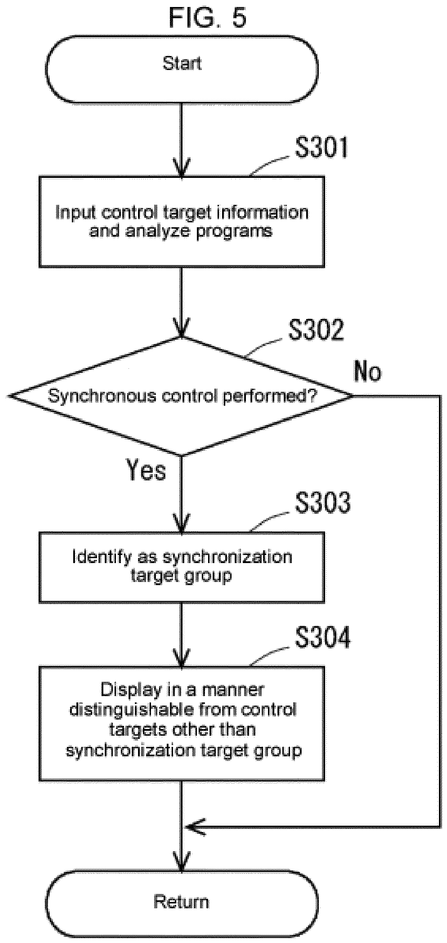

In a first embodiment described below with reference to FIGs. 4A, 4B, and 5, the processing device 10 performs display in a highlighted manner in synchronous simulation. In the first embodiment, a single control device 100 undergoes synchronous control. FIGs. 4A and 4B are diagrams describing the procedure performed by the robots 210 and 211 and also showing the results of simulation displayed by the display 310. More specifically, FIG. 4A shows the robot 210 to grip a workpiece 224 being transported on a conveyor and the robot 211 to grip a workpiece 225 being transported on the same conveyor. The operations of the robots are controlled in accordance with the application program 52, and the workpiece transportation (or the movement of the conveyor) is controlled in accordance with the IEC program 51. In this case, the robot 210 and the motor 222 that drives the conveyor are synchronously controlled before and after the workpiece 224 is gripped, whereas the robot 211 and the same motor 222 are synchronously controlled before and after the workpiece 225 is gripped.

FIG. 4B shows the robot 210 gripping the workpiece 224 and the robot 211 gripping the workpiece 225 to assemble the workpiece 224 with the workpiece 225. The operations of the robots are controlled in accordance with the application program 52, and the robots 210 and 211 are synchronously controlled before and after the assembly of the workpieces. FIG. 5 is a flowchart of a visualization method (processing method) used in the synchronous simulation performed by the processing device 10 based on the operations of the robots 210, 211, and the motor 222.

Referring now to FIG. 5, the procedure performed by the processing device to display the control targets in a highlighted manner in the workpiece assembly operation will be described. The processing device 10 receives, with the communication unit 70, information about, for example, the control targets controlled by the control application processor 30 and the control targets controlled by the IEC program processor 40. The IEC program 51 and the application program 52 are analyzed to simulate, for example, the operations and the positions of the robots 210, 211, and the motor 222 (step S301). The processing in step S301 is performed by the display 310. In step S302, the determination is performed as to whether the above control targets are synchronously controlled in the execution of the programs in the simulation. When the determination result is affirmative, the identification unit 320 identifies the multiple control targets that are synchronously controlled as a synchronization target group (step S303). When multiple groups are used as the targets for the synchronous control (two groups as the synchronous control targets in FIG. 4A), the identification unit 320 distinguishes and identifies each synchronization target group. The synchronization target groups identified in step S303 are displayed by the display 310 in a manner distinguishable from the targets other than the synchronization target groups (e.g., each synchronization target group is displayed with a dotted frame in FIGs. 4A and 4B) (step S304). As a result, the display 310 displays the simulation results in accordance with the execution of the IEC program 51 and the application program 52 as shown in FIGs. 4Aand 4B, and the synchronization target groups are highlighted on the display, allowing the user to easily view the state of the synchronous control. The processing in steps S301 to S304 is repeated.

The display performed in a distinguishable manner in step S304 may be any of various manners. For example, each synchronization target group may be highlighted with a different color, or may be displayed with visual motion such as blinking.

### Second Embodiment

In a second embodiment described below, the processing device 10 performs display in a highlighted manner in synchronous simulation. More specifically, the synchronous control described below is performed when the assembled workpieces shown in FIG. 4B are delivered to another robot. The robot 211 delivers the workpieces. The robot 210A shown in FIG. 1 receives the workpieces. The robot 210A is controlled through a field network 2A by the control device (the other control device) 100A different from the control device 100 that controls the robot 211. For the delivery of the workpieces, synchronous control is performed between the control device 100 and the other control device 100A through the host network 6. The host network 6 uses EtherNet. The precision of synchronous control is lower than the precision of synchronous control through the field network 2 in the control device described in the first embodiment.

In this case as well, the processing method shown in FIG. 5 can be used. In this case, the display performed in a distinguishable manner in step S304 may be changed in accordance with the precision of the synchronous control. For example, the manner of display for the high-precision synchronous control shown in FIGs. 4A and 4B is displayed with the dotted frame enclosing the synchronous control group as shown in FIGs. 4A and 4B, whereas the manner of display for the low-precision synchronous control described above may be highlighted with colors. The display may be performed in any manner other than these examples.

In the embodiment, more specifically, the controller 330 causes the display 310 to display multiple synchronization target groups in different display forms (e.g., display with different colors) in accordance with the types of synchronization precision in the synchronous control. As a result, the state of the synchronous control for gripping the workpieces, assembling the workpieces, and delivering the workpieces with the synchronization functions of control devices 100 and 100A can be visualized together with the movement of each control target. This allows the user to, for example, easily debug and adjust the synchronization function in real time.

### Modifications

The above example focuses on the precision of the synchronous control between the control device 100 and the other control device 100A and the precision of the synchronous control within the control device 100. For the synchronous control with different degrees of precision performed within one control device 100, the above processing associated with the display in a distinguishable manner can also be used.

### Third Embodiment

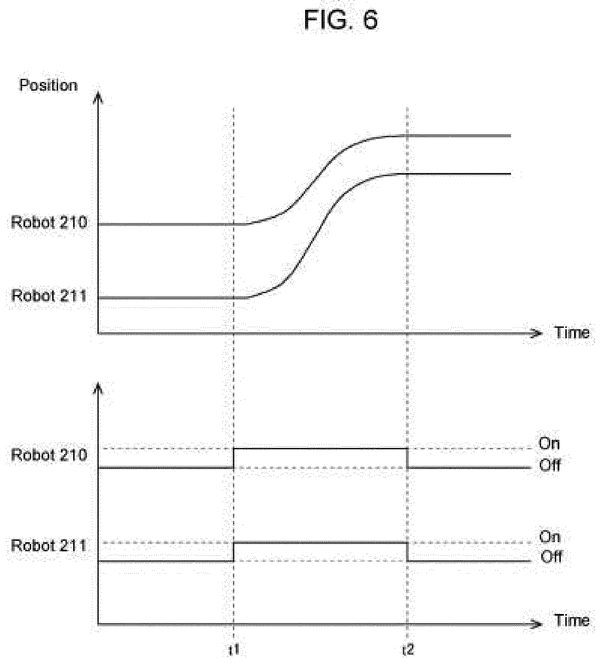

FIG. 6 shows, in its upper part, the transitions of the position command for an end effector gripping the workpiece of each of the robots 210 and 211 shown in FIG. 4B performing the workpiece assembly operation, and shows, in its lower part, the transitions of a signal indicating the on and off states of the synchronous control in the position control of the end effector in each robot. More specifically, the transitions of these commands and signals are the transitions of the signals associated with synchronous control of the robots under the synchronous control. The transitions of these signals are then displayed together with the simulation display of each robot (refer to FIGs. 4A and 4B) on the display 310 with the time axes matching each other. The user can easily compare the movement of each control target in accordance with the execution of the programs and the associated signal transitions. This further improves the efficiency of debugging and reduces the man-hours to be used for designing and verification.

A start time t1 and an end time t2 of the synchronization function can also be displayed as shown in FIG. 6. The synchronization function in the control device 100 is highly precise synchronization in the order of 1 ms, for which visualizing the synchronization start time t1 and the synchronization end time t2 are difficult when the display speed of the display 310 is the same as real time. In the present embodiment, the display on the display 310 uses a slower display speed before and after the synchronization start time or the synchronization end time (e.g., 5 ms or 10 ms) than in other periods, or in other words, a slower display speed before and after the switching time between the synchronous control and the asynchronous control for the synchronization target group. The slower display of simulation and signal transitions allows the user to easily identify portions to be debugged and improves the work efficiency. The user can select the degree of the slow display as appropriate.

### REFERENCE SIGNS LIST

- 1: control system
- 2: field network
- 6: host network
- 10: processing device
- 20: host network interface
- 30: control application processor
- 40: IEC program processor
- 51: IEC program
- 52: application program
- 60: subordinate network interface
- 70: communication unit
- 100,: 100A control device
- 210, 211, 210A: robot
- 220, 220A: servo driver
- 222,222A: motor
- 224, 225: workpiece
- 310: display
- 320: identification unit
- 330: controller

## Claims

1. A processing device for displaying a result of simulation of synchronous control performed by a control device to synchronously control at least two of a plurality of control targets by executing a program, the processing device comprising:
a display configured to display the plurality of control targets in accordance with execution of the program in the simulation;
an identification unit configured to identify, among the plurality of control targets, a synchronization target group including control targets synchronously controlled in the execution of the program in the simulation; and
a controller configured to cause the display to display the synchronization target group identified by the identification unit among the plurality of control targets displayed by the display in a manner distinguishable from control targets other than the synchronization target group.

2. The processing device according to claim 1, wherein
the control device further includes
a first processor configured to execute a first program in a first execution format in which the first program is fully executed for each execution in every predetermined control cycle to calculate a first command value for controlling one or more first control targets being one or more of the plurality of control targets, and
a second processor configured to execute a second program in a second execution format in which parts of the second program are successively executed to calculate a second command value for controlling one or more second control targets being another control target of the plurality of control targets in every predetermined control cycle in accordance with an intermediate code generated by an interpreter interpreting at least a part of the second program,
the display displays the one or more first control targets controlled by the first processor and the one or more second control targets controlled by the second processor in accordance with execution of the first program and the second program in the simulation,
the identification unit identifies, among the one or more first control targets and the one or more second control targets, the synchronization target group synchronously controlled in the execution of the first program and the second program in the simulation, and
the controller causes the display to display the synchronization target group identified by the identification unit among the one or more of first control targets and the one or more of second control targets displayed by the display in a manner distinguishable from control targets other than the synchronization target group.

3. The processing device according to claim 2, wherein
the control device synchronously controls different synchronization target groups with different degrees of synchronization precision by executing the program, and
the controller causes the display to display the different synchronization target groups in different display forms in accordance with types of synchronization precision in the synchronous control.

4. The processing device according to claim 2, wherein
for the control device to perform the synchronous control with another control device including predetermined processors corresponding to the first processor and the second processor in the control device with a degree of synchronization precision different from a degree of synchronization precision within the control device, the controller causes the display to display the synchronization target group synchronously controlled by the control device and an inter-device synchronization target group synchronously controlled between the control device and the other control device in different display forms in accordance with a difference between the synchronization precision within the control device and the synchronization precision between the control device and the other control device.

5. The processing device according to any one of claims 2 to 4, wherein
the controller causes the display to further display temporal transitions of predetermined signals associated with the synchronous control for the control targets included in the synchronization target group in accordance with the execution of the first program and the second program, and the temporal transitions of the predetermined signals are displayed with time axes matching each other.

6. The processing device according to any one of claims 2 to 5, wherein during a predetermined period including a switching time between the synchronous control and asynchronous control of the synchronization target group, the controller causes the display to display the plurality of control targets at a slower speed than during a period other than the predetermined period.

7. A processing method for displaying a result of simulation of synchronous control performed by a control device to synchronously control at least two of a plurality of control targets by executing a program, the method comprising:
causing a display device to display the plurality of control targets in accordance with execution of the program in the simulation;
identifying, among the plurality of control targets, a synchronization target group including control targets synchronously controlled in the execution of the program in the simulation; and
causing the display device to display the synchronization target group identified among the plurality of control targets displayed by the display device in a manner distinguishable from control targets other than the synchronization target group.
